# EUROPÄISCHE PATENTSCHRIFT

(11) **EP 1 617 095 B1**
(45) Veröffentlichungstag und Bekanntmachung des Hinweises auf die Patenterteilung: **26.11.2008**
(21) Anmeldenummer: 05011294.5
(22) Anmeldetag: 25.05.2005
(51) Int. Cl.: F16D 3/68

(54) **Klauenkupplung und Doppelzahnelement zur Verwendung in einer Kupplung**
Claw coupling and double tooth element for use in a coupling
Accouplement et élément double dents pour utilisation dans un accouplement

(30) Priorität: 12.07.2004 DE 202004010920 U
(43) Veröffentlichungstag der Anmeldung: 18.01.2006
(73) Patentinhaber: KTR KUPPLUNGSTECHNIK GMBH, D-48432 Rheine (DE)
(72) Erfinder: Tenfelde, Bernard, 48480 Spelle (DE)
(74) Vertreter: Siekmann, Gunnar

(56) Entgegenhaltungen:
- EP-A- 1 083 355
- DE-A1- 2 618 340
- DE-A1- 2 740 827
- DE-A1- 19 855 538
- GB-A- 832 092
- GB-A- 2 105 440

## Beschreibung

Die Erfindung betrifft eine Klauenkupplung mit den Merkmalen des Oberbegriffes des Patentanspruchs 1. Weiterhin betrifft die Erfindung ein Doppelzahnelement zur Verwendung in einer solchen Klauenkupplung.

Bekannt sind derartige Zahnkränze beispielsweise unter der Marke "Rotex " der KTR Kupplungstechnik GmbH, 48432 Rheine, Deutschland. Diese Kupplungen sind drehelastisch und übertragen das Drehmoment, insbesondere bei Wellenkupplungen. Die Kupplung weist dabei zwei kongruente Kupplungshälften auf, die innenseitig mit konkav ausgebildeten Klauen versehen sind. Die Kupplungshälften sind in Umfangsrichtung um eine halbe Teilung gegeneinander versetzt und so gestaltet, daß in dem Raum zwischen ihnen ein Zahnkranz oder in anderen Ausführungsvarianten Einzelzahnelemente oder Doppelzahnelemente eingelegt werden können. Die Zähne sind bevorzugt als Evolventenzähne ausgebildet. Die einzelnen Zähne derartiger Zahnkränze sind meist ballig profiliert, um Kantenpressungen bei Fluchtungsfehlern der Wellen zu vermeiden Die Zähne und Zahnkränze sind elastisch ausgebildet, da sie zwischen den Klauen der Kupplungshälften einer Druckbelastung ausgesetzt sind. Der Zahn hat daher in der Kupplung auch eine Dämpfungsaufgabe. Insbesondere bei extremen Einsatzumgebungen, insbesondere bei hohen Temperaturen von über 120° C sind die bekannten Zahnkränze, die üblicherweise aus Polyurethanen hergestellt werden, nicht mehr einsetzbar. Ein Zahnkranz mit einzeln aufsteckbaren oder ansetzbaren Zähnen ist aus der DE 298 06 632 U1 bekannt. Die dort offenbarten Zähne weisen zum Teil geschlossene Hohlräume auf, die mit einem Material anderer Härte gefüllt sind.

Ein Doppelzahnelement zur Verwendung in einer Klauenkupplung ist aus der DE 298 06 632 U1 bekannt. Dort ist ein Doppelzahnelement mit einem unteren Verbindungssteg dargestellt. Auch die DE 26 18 340 beschreibt Zwischenglieder, wobei jeweils zwei Zwischenglieder mit einer Verbindungslasche zusammengefaßt sind. Diese beiden verbundenen Zwischenglieder werden sattelartig auf die Klauen einer Kupplungshälfte aufgesetzt. Insofern weisen diese Zwischenglieder eine äußere Verbindung, jedoch keine innere Verbindung bzw. kein Verbindungselement im unteren Bereich der Zwischenglieder auf. Eine weitere Klauenkupplung mit einen Doppelzahnelement ist aus GB-A-832,092 bekannt.

Der Erfindung liegt die Aufgabe zugrunde, eine Klauenkupplung der eingangs genannten Art zu schaffen, die einfach einsetzbar und einfach und zuverlässig montierbar ist.

Die Lösung dieser Aufgabe erfolgt mit einer Klauenkupplung mit den Merkmalen des Patentanspruchs 1. Weiterhin erfolgt die Lösung der Aufgabe mit einem Doppelzahnelement mit den Merkmalen des Patentanspruchs 15. Vorteilhafte Weiterbildungen der Erfindung sind in den Unteransprüchen beschrieben.

Bei einer Klauenkupplung zur Übertragung eines Drehmoments mit zwei Kupplungshälften, die mit ihren Klauen jeweils in einen Zwischenraum der gegenüberliegenden Kupplungshälfte eingreifen, wobei zwischen den Klauen der Kupplungshälften Doppelzahnelemente angeordnet sind, wobei mindestens ein Zahn eine Ausnehmung aufweist und wobei die Zähne des Doppelzahnelementes mindestens im radial inneren Bereich miteinander verbunden sind, ist es erfindungswesentlich, daß die Zähne des Doppelzahnelementes im radial inneren Bereich mit einem profilierten Verbindungselement verbunden sind, wobei das Profil als radial nach außen gerichteter Vorsprung ausgebildet ist.

Dabei ist das Profil bevorzugt in der Mitte des Verbindungselementes und parallel zu den beanspruchten Flanken der Klauen angeordnet. Die Zähne sind dabei bevorzugt im oberen Bereich durch einen durchgängigen Bereich miteinander verbunden oder in einer alternativen Ausführungsform sind an den oberen Enden der Zähne angesetzte Klemmelemente vorgesehen.

Die Ausnehmung ist insbesondere zwischen den sich gegenüberliegenden äußeren Flanken vorgesehen. Die Ausnehmung ist insbesondere auch im Betrieb bzw. Einsatz des Zahns vorhanden. Der Zahn weist daher auch als Teil des Zahnkranzes oder des Doppelzahnelementes eine freie oder offene Ausnehmung auf. Die Ausnehmung dient der Ausbildung besonderer Dämpfungseigenschaften. Die Ausnehmung ist denkbar als vollständig umschlossener Raum im Inneren des Zahns. Bevorzugt ist die Ausnehmung jedoch durchgehend durch den Zahn ausgebildet bzw. erstreckt sich zwischen den beanspruchten Flanken hindurch von einer nichtbeanspruchten Seite zur anderen nichtbeanspruchten Seite. Durch die geometrische Gestaltung können besonders harte und feste Materialien eingesetzt werden, die auch bei ungewöhnlichen Einsatzbedingungen, insbesondere hohen Umgebungstemperaturen, standhalten. Durch die erfindungsgemäße Geometrie wird eine Flexibilität und/oder Dämpfung des Zahns erreicht, die bei bekannten Zähnen durch das Material erreicht wird. Durch die gezeigte Geometrie ergeben sich unter anderem wünschenswerte 2-stufige (mehrstufige) Verdrehkennlinien. Zudem wird eine Materialersparnis erreicht, die insbesondere bei teuren Spezialwerkstoffen besondere Vorteile bringt. In einer bevorzugten Ausgestaltung der Erfindung erstreckt sich die Ausnehmung bis zur radial äußeren Stirnseite des Zahns. Insbesondere ist der Zahn radial nach außen offen ausgebildet. In speziellen Weiterentwicklungen sind an dieser oberen Spitze miteinander zusammenwirkende Vorsprünge und entsprechende Einschnitte ausgebildet, so daß die Spitzen der beiden Flanken des Zahnes in formschlüssiger Verbindung sind oder gehen können. In einer anderen bevorzugten Ausgestaltung der Erfindung ist der Zahn zweiteilig ausgebildet. Die beiden Teile des Zahns haben dabei bevorzugt eine spiegelsymmetrische Gestaltung. In einer bevorzugten Ausgestaltung der Erfindung ist jeder der beiden Teile achssymmetrisch ausgebildet und hat außerdem nahezu die Form eines einzelnen Zahns. In einer anderen bevorzugten Ausgestaltung der Erfindung ist jeder der beiden Teile des Zahns als verstärkte Zahnflanken ausgebildet, die mit dem zweiten Teil zusammenwirkt.

In einer weiteren bevorzugten Ausgestaltung der Erfindung ist die Ausnehmung in einer Seitenansicht kreisförmig ausgebildet. Günstigerweise sind dabei mehrere, insbesondere untereinander verbundene Kreise vorgesehen. Bevorzugt sind zwei übereinander angeordnete Kreisausschnitte und Ausnehmungen gebildet, wobei der untere, also nach innen gerichtete Kreisausschnitt größer ist als der darüberliegende. Die Kreisausschnitte befinden sich beide bevorzugt auf der Längsachse.

In einer bevorzugten Ausgestaltung der Erfindung ist der Zahn aus einem sehr harten und temperaturfesten Kunststoff hergestellt. Der Kunststoff hat dann nur noch geringe Dämpfungseigenschaften.. Derartige Kunststoffe sind vergleichsweise teuer. Durch die erfindungsgemäße Ausgestaltung wird einerseits eine Materialersparnis und andererseits eine Flexibilität des Zahns durch die geometrische Gestaltung erreicht. Derartige Materialien, insbesondere Kunststoffe, sind beispielsweise Polyamid und/oder PEEK. Die geometrische Gestaltung ist dabei bevorzugt so ausgebildet, daß der Zahn eine federnde Dämpfung aufweist. Die Ausnehmung erstreckt sich bevorzugt über mindestens 20 %, in bevorzugten Ausgestaltungen sogar mehr als 30 %, mehr als 40 % oder mehr als 50 % der seitlichen Fläche des Zahns, so daß bei sich durchgehend durch den Zahn erstreckender Ausnehmung im Ergebnis auch 20 %, 30 %, 40 % oder 50 % oder mehr Material eingespart werden. Insbesondere bei Verwendung vergleichsweise kostenintensiver Spezialkunststoffe ist dies ein nicht zu vernachlässigender Vorteil.

Nachfolgend wird die Erfindung anhand in der Zeichnung dargestellter bevorzugter Ausführungsbeispiele weiter erläutert. Im Einzelnen zeigen die schematischen Darstellungen in:
- Fig. 1:: eine perspektivische Ansicht zweier Kupplungshälften mit vier darin eingesetzten Doppelzahnelementen in auseinandergezogener Darstellung;
- Fig. 2:: ein Doppelzahnelement gem. Fig. 1 in vergrößerter Darstellung;
- Fig. 3:: eine perspektivische Ansicht zweier Kupplungshälften mit vier darin eingesetzten Doppelzahnelementen einer erfindungsgemäßen Ausführungsform in auseinandergezogener Darstellung;
- Fig. 4:: ein Doppelzahnelement gem. Fig. 3 in vergrößerter Darstellung;
- Fig. 5:: eine Seitenansicht eines erfindungsgemäßen Zahns;
- Fig. 6:: einen Zahnkranz mit einem Zahn gemäß Fig. 5;
- Fig. 7:: eine geschnittene Draufsicht entlang der Linie EE gemäß Fig. 5;
- Fig. 8:: eine Seitenansicht eines weiteren erfindungsgemäßen Zahns;
- Fig. 9:: einen Zahnkranz mit einem Zahn gemäß Fig. 8;
- Fig. 10:: eine geschnittene Draufsicht entlang der Linie EE gemäß Fig. 8;
- Fig. 11:: eine Seitenansicht eines weiteren erfindungsgemäßen Zahns;
- Fig. 12:: einen Zahnkranz mit einem Zahn gemäß Fig. 11;
- Fig. 13:: eine geschnittene Draufsicht entlang der Linie EE gemäß Fig. 11
- Fig. 14:: eine Seitenansicht eines weiteren erfindungsgemäßen Zahns;
- Fig. 15:: einen Zahnkranz mit einem Zahn gemäß Fig. 14;
- Fig. 16:: eine geschnittene Draufsicht entlang der Linie EE gemäß Fig. 14;
- Fig. 17:: eine Seitenansicht eines weiteren erfindungsgemäßen Zahns;
- Fig. 18:: einen Zahnkranz mit einem Zahn gemäß Fig. 17 und
- Fig. 19:: eine geschnittene Draufsicht auf einen Zahn entlang der Linie EE gemäß Fig. 17.

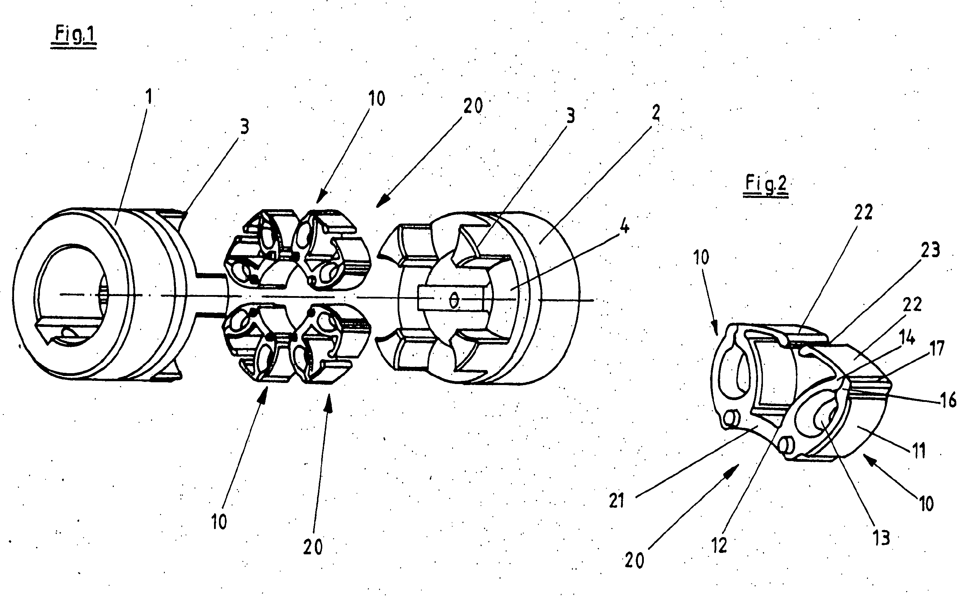

In Fig. 1 ist eine Kupplung in einer auseinandergezogenen perspektivischen Ansicht dargestellt. Die beiden kongruenten Kupplungshälften 1 und 2 sind innenseitig mit konkav ausgebildeten Klauen 3 versehen. Diese sind, wie dargestellt, in Umfangsrichtung versetzt zueinander, so daß die Klauen 3 jeweils in einen Zwischenraum 4 der gegenüberliegenden Kupplung eingreifen. Zwischen den Klauen 3 verbleibt ein Raum, in den ein Zahn, entweder als Einzelzahn, als Doppelzahn oder als Teil eines Zahnkranzes eingelegt werden kann. Insbesondere sind dies Evolventenzähne. In der Fig. 1 sind vier Doppelzahnelemente 20 mit jeweils zwei Zähnen 10 dargestellt, die in die Kupplungshälften eingelegt werden, bzw. als Doppelzahnelemente 20 auf jeweils eine Klaue 3 aufgeklemmt werden.

In Fig. 2 ist ein Doppelzahnelement 20 in vergrößerter Ansicht dargestellt. Das Doppelzahnelement 20 weist zwei einzelne Zähne 10, sowie ein die Zähne im unteren Bereich verbindendes Verbindungselement 21 und zwei an den oberen Enden der Zähne 10 angesetzte Klemmelemente 22 auf. Die beiden Klemmelemente 22 enden mit einem Abstand 23 zueinander und das Verbindungselement 21 weist eine gewisse Flexibilität auf. Die zwischen den Zähnen, dem Verbindungselement 21 und den Klemmelementen 22 verbleibende Ausnehmung entspricht in Form und Größe den Klauen 3 der Kupplungshälften 1 und 2, so daß das Doppelzahnelement 20 auf eine Klaue 3 aufgeschoben werden kann. Jeder der Zähne 10 weist zwei Flanken 11 und 12 auf. Eine der Flanken kommt zur Anlage an eine Flanke einer Klaue 3 einer Kupplungshälfte 1 oder 2 und die andere Flanke des Zahns 10 kommt zur Anlage an eine Flanke einer Klaue 3 der anderen Kupplungshälfte 1 oder 2. Zwischen den Flanken 11 und 12 ist eine Ausnehmung 13 vorgesehen, die insbesondere auch den geometrischen Mittelpunkt des Zahns 10 erfaßt. Die Breite der Ausnehmung 13 erstreckt sich etwa über 2/3 der Breite des Zahns, mindestens über die Hälfte der Breite des Zahns. In der Höhe erstreckt sich die Ausnehmung 13 etwa über die Hälfte der Höhe des Zahns 10. Die Ausnehmung 13 ist im Ganzen etwas gestreckt ausgebildet und erstreckt sich in der Seitenansicht durchgängig von einer Seite des Zahns bis zur anderen Seite des Zahns. Im oberen Endbereich ist die Öffnung 13 offen ausgebildet, bzw. es sind im oberen Bereich des Zahns 10 die beiden Flanken 10 und 11 durch einen Spalt 17 voneinander getrennt, wobei die beiden an den Spalt angrenzenden Endbereiche 16 wellenförmig kongruent zueinander ausgebildet sind, so daß sich eine formschlüssige Lage der beiden Teile 16 der Flanken 11 und 12 ergibt.

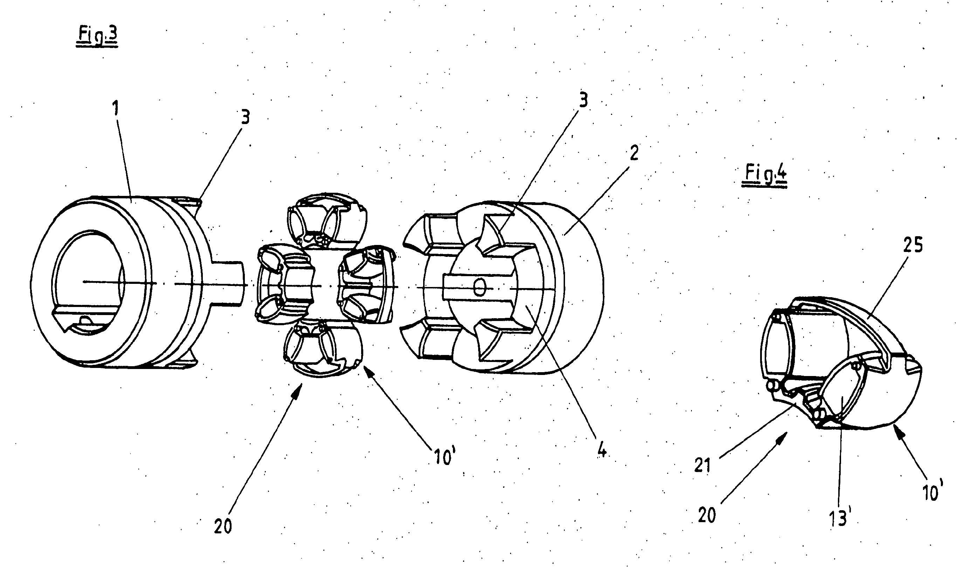

In Fig. 3 ist eine zur Fig. 1 vergleichbare Kupplung dargestellt. Gleiche Teile sind mit gleichen Bezugszeichen versehen. In den hier in der Kupplung verwendeten Doppelzahnelementen 20 sind Zähne 10' verwendet, die eine etwas andere Gestaltung haben, als der in der Fig. 1 verwendete Zahn 10.

In Fig. 4 ist das Doppelzahnelement 20 in einer vergrößerten Darstellung gezeigt. Die Zähne 10' sind durch ein profiliertes Verbindungselement 21 im unteren Bereich miteinander verbunden und im oberen Bereich durch einen durchgängigen Bereich 25 miteinander verbunden. Auch hier kann das Doppelzahnelement 20 auf eine Klaue 3 aufgesteckt werden. Die Ausnehmung 13' ist dem hier gezeigten Ausführungsbeispiel ist oben geschlossen und folgt in ihren Abmessungen den seitlichen Aus- und Abmessungen des Zahn 10'. Der zwischen der Ausnehmung 13' und den Aussenabmessungen des Zahns 10' verbleibende Rand ist im wesentlichen überall gleich breit, so daß der Querschnitt der Ausnehmung 13' im wesentlichen dem Querschnitt des Zahns 10' entspricht. Die Ausnehmung ist auch hier durchgehend durch den Zahn 10' ausgebildet.

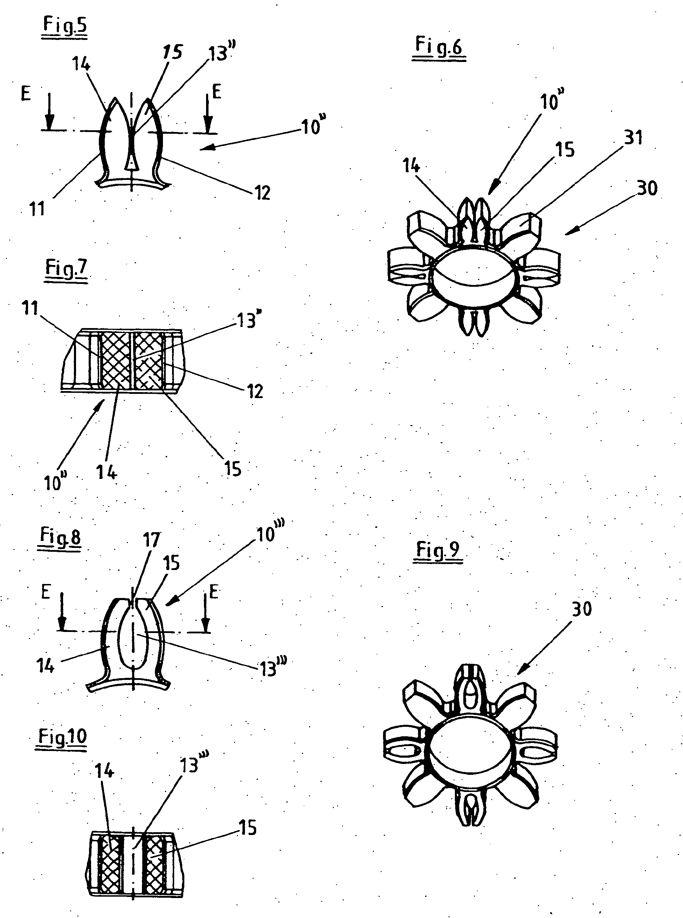

In den Fig. 5, 8, 11, 14 und 17 sind weitere Querschnitte durch Zähne dargestellt, die entweder als Einzelzähne als Teil eines Doppelzahnelementes oder als Teil eines Zahnkranzes in eine Kupplung gemäß der Fig. 1 und 3 eingelegt werden können.

Die in Fig. 5 dargestellte Seitenansicht eines erfindungsgemäßen Zahns 10" weist äußere Flanken 11 und 12 sowie einen Hohlraum 13" auf, der im geometrischen Mittelpunkt des Zahns 10" am schmalsten ist und sich nach oben und unten wieder aufweitet. Die Ausnehmung 13" ist oben offen und es sind zwei Zahnhälften ausgebildet, von denen jeder einzelne eine ungefähr doppelt konvexe Form aufweist, so daß die Ausnehmung 13" eine annähernd doppelt konkave Form aufweist. Durch diese Form ergibt sich eine 2-stufige Verdrehkennlinie. Die beiden Hälften des Zahns 10" sind spiegelsymmetrisch zur Längsachse ausgebildet. Auch jede einzelne Hälfte ist annähernd spiegelsymmetrisch zur Längsachse.

In Fig. 6 ist ein Zahnkranz 30 dargestellt, der 4 bis 12 Zähne, in der gezeigten Ausführungsform acht Zähne aufweist, wobei jeder zweite Zahn in Form eines üblichen Zahns 31 ohne Ausnehmung ausgebildet ist, während jeder zweite Zahn in Form eines Zahns 10" mit Ausnehmung 13" ausgebildet ist. Die beiden jeweils doppelelliptischen Teile des Zahns 10" sind mit 14 und 15 bezeichnet.

In Fig. 7 ist eine geschnittene Draufsicht entlang der Linie EE gemäß Fig. 5 dargestellt. Die beiden nur mit einer schmalen Unterbrechung aneinander angrenzenden Teile 14 und 15 sind deutlich zu erkennen.

In den Fig. 8, 9 und 10 ist eine weitere Ausführungsform dargestellt. In Fig. 8 ist ein Zahn 10''' in Seitenansicht dargestellt. Die die Flanken 11 und 12 aufweisenden Seitenteile 14 und 15 umgeben eine etwa ovale Öffnung 13''', die an den Seiten eine gleichmäßige Wandstärke der Teile 14 und 15 definiert. Im oberen Bereich ist eine Öffnung 17 vorgesehen wodurch die Ausnehmung 13''' nach oben offen ist. In Fig. 9 ist ein weiterer Zahnkranz 30 dargestellt, bei dem jeder zweite Zahn als Zahn'" mit Ausnehmung 13''' ausgebildet ist. Im übrigen wird auf die Beschreibung zu Fig. 6 verwiesen. In Fig. 10 ist eine geschnittene Draufsicht entlang Linie EE in Fig. 8 dargestellt. Im Gegensatz zu Fig. 7 ist hier zu erkennen, daß die Ausnehmung 13'" wesentlich breiter ist bzw. hier etwa die Breite jedes Seitenteils 14 und 15 hat. Dies gilt zumindest in einem mittleren Bereich entsprechend des Schnittes EE. In dieser Draufsicht ist auch besonders gut zu erkennen, daß die Ausnehmung 13'" durchgängig durch den gesamten Zahn ausgebildet ist.

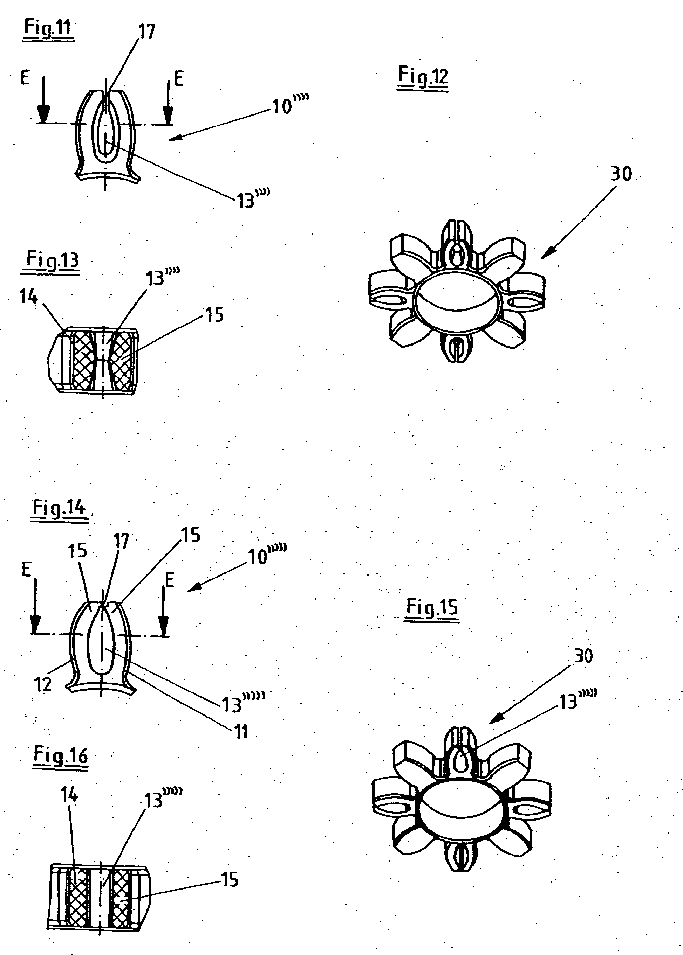

In Fig. 11 ist ein weiterer Zahn 10"" dargestellt. Dieser Zahn entspricht mit seiner Ausnehmung 13"" im wesentlichen dem in Fig. 8 dargestellten Zahn. Die Ausnehmung ist im wesentlichen oval und der Zahn ist zweiteilig ausgebildet bzw. oben mit einer Öffnung 17 versehen. Zu der Erläuterung zur Fig. 12 kann im wesentlichen auf Fig. 9 verwiesen werden. In Fig. 13 ist der wesentliche Unterschied dargestellt, nämlich insofern als die Ausnehmung 13"" nicht durchgängig gerade ausgebildet ist, sondern in der Mitte eine Einschnürung aufweist, so daß die Ausnehmung 13"" im wesentlichen aus zwei zur Mitte enger werdenden Teilausnehmungen ausgebildet ist.

In Fig. 14 ist ein Zahn 10''''' mit einer Ausnehmung 13''''' dargestellt. Hier ist hervorzuheben, daß im oberen Bereich der Öffnung oder des Spaltes 17 die Kopfflächen 16 der Flanken 11 und 12 mit zueinander korrespondierenden Vorsprüngen ausgebildet sind, so daß sich eine formschlüssige Verbindung bzw. ein formschlüssiges Aneinanderlegen dieser Flächen ergibt. Eine vergleichbare Ausgestaltung war auch bei dem Doppelzahnelement in Fig. 2 dargestellt. In Fig. 15 ist ein Zahnkranz dargestellt, bei dem jeder zweite Zahn als ein solcher in Fig. 14 dargestellter Zahn 13''''' ausgebildet ist. In Fig. 16 ist eine geschnittene Draufsicht entlang der Linie EE in Fig. 14 dargestellt.

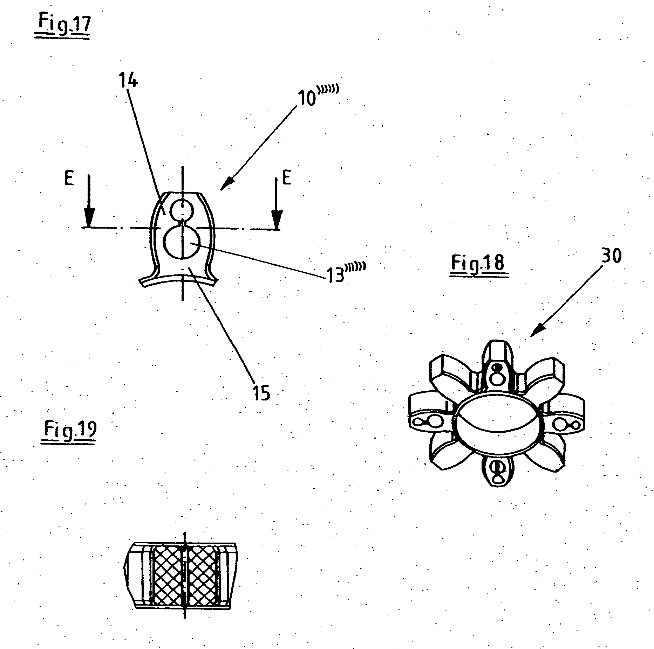

In Fig. 17 ist eine Draufsicht einer weiteren Ausführungsform eines Zahns 10""" dargestellt. In dieser ist die Ausnehmung 13""" in Form von zwei miteinander verbundenen übereinanderliegenden Kreisen ausgebildet. Der Zahn 10""" ist oben geschlossen. Der untere Kreis bzw. die untere kreisförmige Ausnehmung ist größer als die darüberliegende, ebenfalls auf der zentralen Achse positionierte kleinere kreisförmige Ausnehmung. Der mittige Steg zwischen den beiden Öffnungen berührt sich bei mittlerer Belastung und es ergibt sich bei einer weiteren vergrößerten Belastung eine 2-stufige Verdrehkennlinie. Die untere, größere Ausnehmung weist einen etwa um 30 % größeren Durchmesser auf als die obere kreisförmige Ausnehmung. Die Ausnehmungen sind so positioniert und dimensioniert, daß die Flankenstärken der seitlichen Bereiche 14 und 15 an den schmalsten Stellen immer noch etwa gleich stark sind. Es können auch alle Zähne diese Ausbildung besitzen. Die beiden kreisförmigen Ausnehmungen sind untereinander verbunden.

In Fig. 18 ist in perspektivischer Ansicht ein Zahnkranz 30 dargestellt, bei dem jeder zweite Zahn als Zahn gemäß Fig. 17 ausgebildet ist. Die dazwischen liegenden Zähne sind als ausnehmungsfreie Zähne ausgebildet, so wie dies auch in den Fig. 6, 9, 12 und 15 der Fall ist.

In Fig. 19 ist ein Schnitt entlang der Linie EE gemäß Fig. 17 dargestellt.

## Patentansprüche

1. Klauenkupplung zur Übertragung eines Drehmoments mit zwei Kupplungshälften (1, 2), die mit ihren Klauen (3) jeweils in einen Zwischenraum (4) der gegenüberliegenden Kupplungshälfte eingreifen, wobei zwischen den Klauen (3) der Kupplungshälften (1, 2) Doppelzahnelemente (20) angeordnet sind, wobei mindestens ein Zahn (10') eine Ausnehmung (13 bis 13""") aufweist **dadurch gekennzeichnet, daß** die Zähne des Doppelzahnelements mindestens im radial inneren Bereich miteinander verbunden sind, und
daß die Zähne (10) des Doppelzahnelements im radial inneren Bereich mit einem profilierten Verbindungselement (21) verbunden sind, wobei das Profil als radial nach außen gerichteter Vorsprung ausgebildet ist.

2. Klauenkupplung nach Anspruch 1, **dadurch gekennzeichnet, daß** das Profil in der Mitte des Verbindungselementes (21) und parallel zu den beanspruchten Flanken (11, 12) der Klauen angeordnet ist.

3. Klauenkupplung nach Anspruch 1, **dadurch gekennzeichnet, daß** die Zähne (10) im radial äußeren Bereich durch einen durchgängigen Bereich (25) miteinander verbunden sind.

4. Klauenkupplung nach Anspruch 1, **dadurch gekennzeichnet, daß** das Doppelzahnelement (20) zwei an den radial äußeren Enden der Zähne (10) angesetzte Klemmelemente (22) aufweist.

5. Klauenkupplung nach einem der vorhergehenden Ansprüche, **dadurch gekennzeichnet, daß** sich die Ausnehmung (13 bis 13""") durchgehend zwischen den beanspruchten Flanken (11, 12) des Zahns (10, 10") hindurch von einer nicht beanspruchten Seite zur anderen nicht beanspruchten Seite des Zahns erstreckt.

6. Klauenkupplung nach einem der vorhergehenden Ansprüche **dadurch gekennzeichnet, daß** die Ausnehmung (10", 10"', 10"", 10""') bis zur radial äußeren Stirnseite des Zahns (10", 10"', 10"", 10""') ausgebildet ist.

7. Klauenkupplung nach einen der vorhergehenden Ansprüche, **dadurch gekennzeichnet, daß** der Zahn (10", 10"', 10"", 10""') radial nach außer offen ausgebildet ist.

8. Klauenkupplung nach einem der vorhergehenden Ansprüche, **dadurch gekennzeichnet, daß** der Zahn (10', 10", 10"', 10"", 10""') zweiteilig ausgebildet ist.

9. Klauenkupplung nach Anspruch 4, **dadurch gekennzeichnet, daß** an den oberen Spitzen miteinander zusammenwirkende Vorsprünge und entsprechende Einschnitte ausgebildet sind.

10. Klauenkupplung nach einem der vorhergehenden Ansprüche, **dadurch gekennzeichnet, daß** die Ausnehmung (13""") in Seitenansicht des Zahns (10""") kreisförmig ausgebildet ist.

11. Klauenkupplung nach Anspruch 9, **dadurch gekennzeichnet, daß** die Ausnehmung (13""") in Seitenansicht des Zahns (10""") aus mehreren untereinander verbundenen Kreisen gebildet ist.

12. Klauenkupplung nach einem der vorhergehenden Ansprüche, **dadurch gekennzeichnet, daß** der Zahn (10 bis 10""") aus einem harten Kunststoff hergestellt ist.

13. Klauenkupplung nach einem der vorhergehenden Ansprüche, **dadurch gekennzeichnet, daß** die Ausnehmung (13 bis 13""") so ausgelegt ist, daß der Zahn (10 bis 10""") eine federnde Dämpfung aufweist.

14. Klauenkupplung nach einem der vorhergehenden Ansprüche, **dadurch gekennzeichnet, daß** die Fläche der Ausnehmung (10 bis 10""") mindestens 20 %, bevorzugt mindestens 30 %, und in besonderer Ausführungsform bevorzugt mindestens 50 % der seitlichen Fläche des Zahns (10 bis 10""") einnimmt.

15. Doppelzahnelement zur Verwendung in einer Klauenkupplung nach einem der vorhergehenden Ansprüche,
wobei mindestens ein Zahn (10') eine Ausnehmung (13 bis 13""") aufweist **dadurch gekennzeichnet, daß** die Zähne des Doppelzahnelements mindestens im radial inneren Bereich miteinander verbunden sind, und
daß die Zähne (10) des Doppelzahnelements im radial inneren Bereich mit einem profilierten Verbindungselement (21) verbunden sind, wobei das Profil als nach radial außen gerichteter Vorsprung ausgebildet ist.

## Claims

1. A claw coupling for the transmission of a torque moment comprising two coupling halves (1, 2), which each engage with their claws (3) in an intermediate space (4) of the opposed coupling half, wherein double-tooth elements (20) are arranged between the claws (3) of the coupling halves (1, 2), wherein at least one tooth (10') has a recess (13 to 13''''''), **characterised in that** the teeth of the double-tooth elements are connected with each other at least in the radially inner region and that the teeth (10) of the double-tooth elements are combined in the radially inner region with a profiled connecting element (21), wherein the profile is formed as a radially outwardly directed projection.

2. The claw coupling according to claim 1, **characterised in that** said profile is arranged in the middle of the connecting element (21) and parallel to the stressed flanks (11, 12) of the claws.

3. The claw coupling according to claim 1, **characterised in that** said teeth (10) are connected to one another in the radially outer region by a continuous region (25).

4. The claw coupling according to claim 1, **characterised in that** said double-tooth element (20) has two clamping elements (22), which are attached to the radially outer ends of the teeth (10).

5. The claw coupling according to any of the preceding claims, **characterised in that** said recess (13 to 13'''''') extends continuously between the stressed flanks (11, 12) of the tooth (10, 10'') from one unstressed side to the other unstressed side of the tooth.

6. The claw coupling according to any of the preceding claims, **characterised in that** said recess (13'', 13''', 13'''', 13''''') is formed up to the radially outer face of the tooth (10'', 10''', 10'''', 10''''').

7. The claw coupling according to any of the preceding claims, **characterised in that** said tooth (10", 10''', 10'''', 10''''') is formed so that it is open radially outwards.

8. The claw coupling according to any of the preceding claims, **characterised in that** said tooth (10', 10'', 10''', 10'''', 10''''') is formed in two parts.

9. The claw coupling according to claim 4, **characterised in that** projections which cooperate with one another and corresponding indentations are formed on the upper tips.

10. The claw coupling according to any of the preceding claims, **characterised in that** said recess (13''''''), in a lateral view of the tooth (10''''''), is formed as a circle.

11. The claw coupling according to claim 9, **characterised in that** said recess (13'''''') is, in a lateral view of the tooth (10''''''), formed by a plurality of interconnected circles.

12. The claw coupling according to any of the preceding claims, **characterised in that** said tooth (10 to 10'''''') is made out of a hard plastic.

13. The claw coupling according to any of the preceding claims, **characterised in that** said recess (13 to 13'''''') is designed in such a manner that the tooth (10 to 10'''''') has a resilient damping.

14. The claw coupling according to any of the preceding claims, **characterised in that** said surface of the recess (13 to 13'''''') takes up at least 20%, preferably at least 30% and in a particular embodiment, preferably at least 50% of the lateral surface of the tooth (10 to 10'''''').

15. Double-tooth element for use in a claw coupling according to any of the preceding claims, whereby at least one tooth (10') has a recess (13 to 13''''''), **characterised in that** said teeth of the double-tooth element are connected to one another at least in the radially inner region and that the teeth (10) of the double-tooth element are connected in the radially inner region with a profiled connecting element (21), wherein the profile is formed as a radially outwardly directed projection.

## Revendications

1. Accouplement à crabots pour la transmission d'un couple de rotation, avec deux moitiés d'accouplement (1, 2) s'engageant chacune avec son crabot (3) dans un espace intermédiaire (4) de la moitié d'accouplement opposée, des éléments à deux dents (20) étant disposés entre les crabots (3) des moitiés d'accouplement (1, 2), au moins une dent (10') comportant un évidement (13 à 13''''''),
**caractérisé en ce que**
les dents de l'élément à deux dents sont reliées entre elles au moins dans la région située radialement à l'intérieur, et
**en ce que** dans la région située radialement à l'intérieur, les dents (10) de l'élément à deux dents sont reliées à un élément d'assemblage profilé (21), le profil étant conçu comme une saillie orientée radialement vers l'extérieur.

2. Accouplement à crabots selon la revendication 1, **caractérisé en ce que** le profil est disposé au milieu de l'élément d'assemblage (21) et parallèlement aux flancs sollicités (11, 12) des crabots.

3. Accouplement à crabots selon la revendication 1, **caractérisé en ce que** les dents (10) situées dans la région radialement à l'extérieur sont reliées entre elles par une région ininterrompue (25).

4. Accouplement à crabots selon la revendication 1, **caractérisé en ce que** l'élément à deux dents (20) comporte deux éléments de serrage (22) montés sur les extrémités des dents (10) qui est située radialement à l'extérieur.

5. Accouplement à crabots selon l'une des revendications précédentes, **caractérisé en ce que** l'évidement (13 à 13'''''') s'étend sans interruption entre les flancs sollicités (11, 12) de la dents (10, 10''), à partir d'un côté non sollicité jusqu'à l'autre côté non sollicité de la dent.

6. Accouplement à crabots selon l'une des revendications précédentes, **caractérisé en ce que** l'évidement (13'', 13''', 13'''', 13''''') est formé jusqu'à la face frontale située radialement à l'extérieur de la dent (10'', 10''', 10'''', 10''''').

7. Accouplement à crabots selon l'une des revendications précédentes, **caractérisé en ce que** la dent (10'', 10''', 10'''', 10''''') est conçue de manière à être ouverte radialement vers l'extérieur.

8. Accouplement à crabots selon l'une des revendications précédentes, **caractérisé en ce que** la dent (10', 10'', 10''', 10'''', 10''''') est conçue en deux parties.

9. Accouplement à crabots selon la revendication 4, **caractérisé en ce que** des saillies et des encoches correspondantes, coopérant ensemble, sont formées sur les pointes supérieures.

10. Accouplement à crabots selon l'une des revendications précédentes, **caractérisé en ce que** l'évidement (13'''''') est conçue de façon circulaire du point de vue latéral de la dent (10'''''').

11. Accouplement à crabots selon la revendication 9, **caractérisé en ce que** l'évidement (13'''''') est formé par plusieurs cercles reliés entre eux, du point de vue latéral de la dent (10'''''').

12. Accouplement à crabots selon l'une des revendications précédentes, **caractérisé en ce que** la dent (10 à 10'''''') est constituée d'une matière plastique dure.

13. Accouplement à crabots selon l'une des revendications précédentes, **caractérisé en ce que** l'évidement (13 à 13'''''') est conçu de manière à fournir un amortissement élastique à la dent (10 à 10'''''').

14. Accouplement à crabots selon l'une des revendications précédentes, **caractérisé en ce que** la surface de l'évidement (13 à 13""") prend au moins 20%, de préférence au moins 30% et dans une forme de réalisation particulièrement préférée au moins 50% de la surface latérale de la dent (10 à 10'''''').

15. Elément à deux dents destiné à être utilisé dans un accouplement à crabots, selon l'une des revendications précédentes, dans lequel au moins une dent (10' à 10'''''') comporte un évidement (13 à 13''''''),
**caractérisé en ce que**
Les dents de l'élément à deux dents sont reliées entre elles au moins dans la région située radialement à l'intérieur, et
**en ce que** les dents (10) de l'élément à deux dents sont reliées à un élément d'assemblage profilé (21) dans la région située radialement à l'intérieur, le profil étant conçu comme une saillie orientée radialement vers l'extérieur.
